# EUROPEAN PATENT SPECIFICATION

(11) **EP 1 655 452 B1**
(45) Date of publication and mention of the grant of the patent: **02.04.2014**
(21) Application number: 05256849.0
(22) Date of filing: 04.11.2005
(51) Int. Cl.: F01D 5/18

(54) **Cooling features for an airfoil**
Kühlkonfiguration für ein Schaufelblatt
Configuration pour le refroidissement d'une aube d'une turbomachine

(30) Priority: 09.11.2004 US 984216
(43) Date of publication of application: 10.05.2006
(73) Proprietor: United Technologies Corporation, Hartford, CT 06101 (US)
(72) Inventor: Pietraszkiewicz, Edward F., Southington CT 06489 (US); Coons, Todd, Gilbert Arizona 85296 (US); Botnick, Christina, Stafford Springs CT 06076 (US)
(74) Representative: Leckey, David Herbert

(56) References cited:
- EP-A- 0 154 893
- EP-A- 0 541 207
- EP-A- 1 126 134
- WO-A-99/06672
- GB-A- 2 358 226

## Description

### BACKGROUND OF THE INVENTION

This invention relates generally to a cooling passage for an airfoil. More particularly, this invention relates to a core assembly for the formation of cooling passages for an airfoil.

A gas turbine engine typically includes a plurality of turbine blades that transform energy from a mainstream of combustion gasses into mechanical energy that rotates and drives a compressor. Each of the turbine blades includes an airfoil section that generates the rotational energy desired to drive the compressor from the flow of main combustion gasses.

The turbine blade assembly is exposed to the hot combustion gasses exhausted from the combustor of the gas turbine engine. The temperature of the combustion gasses exhausted through and over the turbine blade assemblies can decrease the useful life of a turbine blade assembly. It is for this reason that each turbine blade is provided with a plurality of cooling air passages. Cooling air is fed through each of the turbine blades and exhausted out film holes on the surface of the turbine blade. The position of the film holes on the turbine blade creates a layer of cooling air over the surfaces of the turbine blade. The cooling air insulates the turbine blade from the hot combustion gasses. By insulating the turbine blade from exposure to the hot combustion gasses the turbine blade reliability and useful life is greatly extended.

Typically, the cooling passages within a turbine blade are formed by a ceramic core that is provided with and surrounded with molted material that is used to form the turbine blade. Once the molten material utilized to form the turbine blade is solidified the core material is removed. Removing the core material leaves the desired cooling air passages along with the desired configuration of film cooling holes.

As appreciated, each turbine blade assembly represents a dead end or an end of a cooling airflow path. This is so because cooling air flowing from an inner side or platform of the turbine blade flow radially outward to a tip of the turbine blade. The tip of the turbine blade is closed off forming the end of the cooling air passage. Accordingly, the only exit for cooling air through the turbine blade is through the plurality of the film cooling holes disposed about and on the surface of the turbine blade. The configuration and quantity of the film holes for cooling the turbine blade is determined to produce a desired flow rate of cooling air.

The shape of the turbine blade varies throughout the cross section from a leading edge of the turbine blade to a trailing edge. The leading edge is most often much thicker than the trailing edge. However, the cooling needs in the trailing edge are often greater than those in the leading edge and therefore require cooling passages arranged within a close proximity to the trailing edge. As appreciated, cooling passages within the thinner edge section are much smaller. The smaller cooling passages require smaller core assemblies to form those cooling passages. As the size of the core assemblies are reduced the susceptibility to damage during the molding operation increases. The smaller core assemblies required the desired cooling passage in the thinner sections of the turbine blade and are more susceptible to damage during manufacturing.

Accordingly, it is desirable to develop a core assembly that is robust enough to provide for reliable manufacturing process results while still providing for the formation of the smaller cooling air passages in the thinner sections of the turbine blade assembly.

Another concern in the design and configuration of cooling air passages is the direction of cooling air on an inner side of the cooling passage. The cooling passage typically receives air from a main cavity section. The main cavity section of the turbine blade is in turn in communication with a cooling air source. The cooling air passage therefore includes an inner surface that is adjacent the main cavity and an outer surface that is adjacent an exterior surface of the turbine blade. Impingement holes within the cooling air passages communicate air from the main cavity into the cooling air passage and against the outer surface.

Accordingly, it is desirable to develop a core assembly to form a cooling air passage within a turbine blade assembly that is both reliable during manufacturing processes and that provides the desirable cooling air flow properties to maximize to heat transfer capabilities applications.

### SUMMARY OF THE INVENTION

From a first aspect, the invention provides an airfoil as set forth in claim 1. A sample embodiment of this invention includes a turbine blade having a cooling passage where each of the impingement holes is isolated from at least some of the other impingement holes. The isolation of the impingement holes within the cooling passage provides for the direction of cooling airflow to specific desired areas. Further, the core assembly utilized for forming the cooling air passage provides a series of structures that strengthen and improve rnanufacrtuability.

An example turbine blade assembly of this invention is formed with a cooling air passage that is in communication with a main cavity. The main cavity is in turn in communication with cooling air from other systems. The cooling passage is formed through the use of a unique core assembly that includes a plurality of impingement holes that are isolated from each other. Isolating each of the impingement holes from at least some of the other impingement holes prevents cross flow between impingement holes to improve cooling air flow against an outer surface of the cooling passage.

The core assembly provides the configuration of the cooling passage and includes impingement structures for forming the impingement openings. Each of the impingement structures is isolated from at least some of the other impingement structures by separation structures. The separation structures form the channels within the cooling passage that isolate the impingement openings. Each of the channels formed by the core assembly is in communication with expanded chambers at a side of the cooling passage. Within the expanded chamber are film structures that are provided for creating the film openings between the cooling air passage and an exterior surface of the turbine blade assembly.

Accordingly, the turbine blade assembly of this invention includes cooling air passages that provide desirable cooling characteristics for the turbine blade.

Also provided in accordance with the invention are a core assembly as set forth in claim 10 and a method of forming a cooling passage as set forth in claim 15.

These and other features of the present invention can be best understood from the following specification and drawings, the following of which is a brief description.

### BRIEF DESCRIPTION OF THE DRAWINGS

Figure 1A is a side view of a turbine blade assembly according to this invention.
Figure 1B is a cross-section view of a portion of the turbine blade assembly.
Figure 2 is a perspective view of an airfoil assembly.
Figure 3 is a perspective view of a portion of a core assembly according to this invention.
Figure 4 is a perspective view of an airfoil assembly according to this invention with a portion broken away to illustrate the cooling air passage.
Figure 5 is a perspective view of a core assembly according to this invention.
Figure 6 is a view of an exterior surface of a cooling passage.
Figure 7 is a plan view of a side of a core assembly according to this invention.
Figure 8 is a plan view of the other side of a core assembly as shown in Figure 7.
Figure 9 is a view of one side of a core assembly according to this invention.
Figure 10 is a view of an opposite side of a core assembly illustrated in Figure 9.

### DETAILED DESCRIPTION OF THE PREFERRED EMBODIMENT

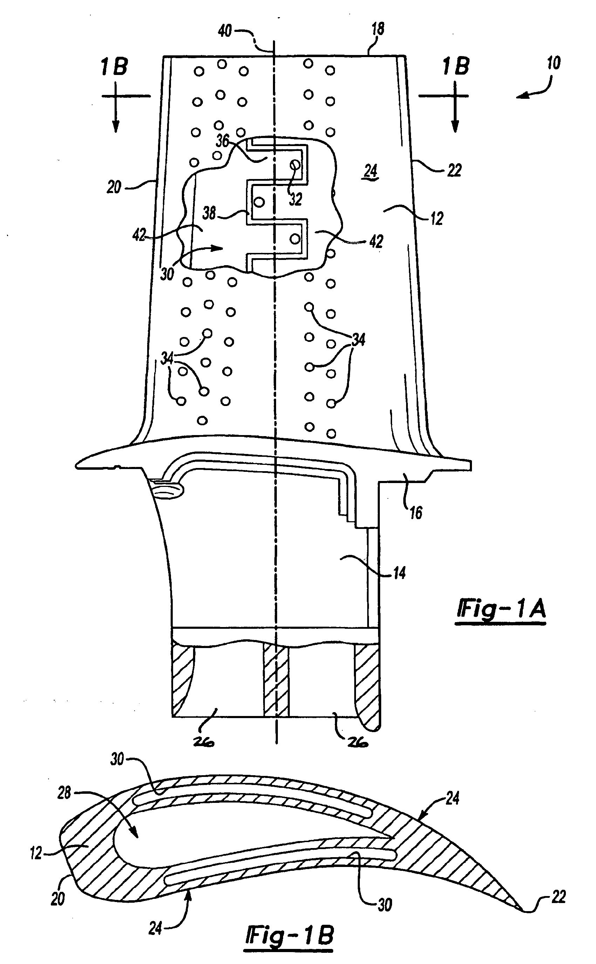

Referring to Figures 1A and 1B, turbine blade assembly 10 includes an airfoil section 12, a root section 14, and a platform section 16. The root section 14 extends into a hub portion (not shown) as is known in the art. The root section 14 extends to the platform section 16. The airfoil 12 extends upwardly from the platform section 16. Turbine airfoil section 12 extends from the platform section 16 to a tip 18. The turbine blade assembly 10 includes a leading edge 20 and a trailing edge 22. Between the leading edge 20 and the trailing edge 22 is the exterior surface 24. The exterior surface 24 is shaped to provide the desired transition or conversion of gas stream flow to rotational mechanical energy. As should be understood, the turbine blade assembly 10 as is shown in Figure 1A is as is known to a worker skilled in the art.

The turbine blade assembly 10 includes a cooling passage 30. The cooling passage 30 is disposed within the turbine blade assembly 10. Cooling air enters the turbine blade assembly 10 through passages 26 within the root section 14. Cooling air enters through the passages 26 into a main cavity 28 (Figure 1B). Main core 28 is a hollow portion within the interior of the turbine blade assembly 10. Cooling air communicated through the passages 26 and into the main cavity 28 enters cooling passages 30 disposed within the turbine blade assembly 10. Cooling air enters the cooling passages 30 from the main cavity 28 through a plurality of impingement openings 32.

Cooling airflow from the impingement openings 32 flows toward expansion chambers 42 disposed opposite the impingement opening 32. Cooling airflow then proceeds through the walls of the turbine blade assembly 10 through film openings 34. Cooling air exiting the cooling passage 30 through the film openings 34 flows over the exterior surface 24 of the turbine blade assembly 10 to provide a cooling and insulating layer of air.

The turbine blade assembly 10 of this invention includes the cooling passage 30. Each of the cooling passages 30 includes the impingement openings 32. The impingement openings 32 are isolated from each other by channels 36. The channels 36 are formed by a series of separating structures 38. Separation and isolation of each of the impingement openings 32 provides for the separation of cooling flow that is impinged upon an outer surface of the cooling passage 30. Further, isolation of adjacent impingement opening 32 prevents and reduces cross flow problems encountered with typical conventional prior art impingement opening designs. The flow from the impingement openings 32 passes through the channel 36 to the plurality of film holes 34. Film holes 34 are in communication with the expanded chamber 42. The expanded chamber 42 provides a portion of the cooling passage for the accumulation of cooling air that is to be communicated to the film openings 34. The accumulation of cooling air within the expanded chamber 42 reduces problems associated with back wall strikes corresponding with impingement openings 32.

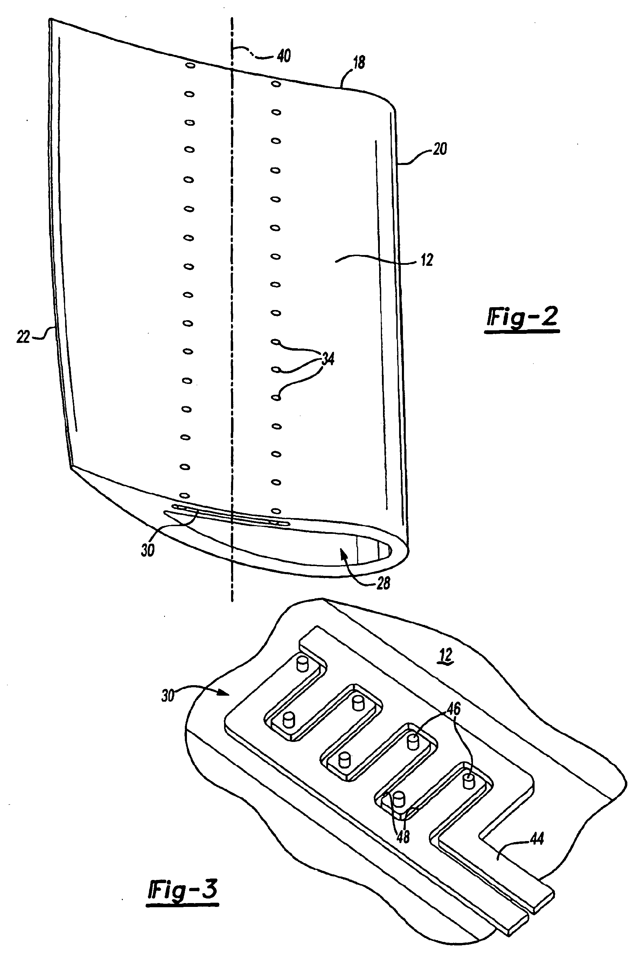

Referring to Figure 2, a perspective view of the airfoil 12 is shown to illustrate the configuration of the main cavity 28. The main cavity 28 provides for communication of cooling air up through the central portion of the turbine blade assembly 10 and to communicate with cooling passages 30. The specific shape and configuration of the turbine blade assembly and the airfoil 12 illustrated in Figure 2 is as known.

Referring to Figure 3, the cooling passage 30 is formed within the turbine blade assembly 10 through the use of core assembly 44. The core assembly 44 provides for the formation of the various structures and configuration including openings, channels of the cooling passage during fabrication of the turbine blade assembly 10. Conventionally, the turbine blade assembly 10 is fabricated through the use of a conventional molding process. The core assembly 44 can be fabricated from known core materials such as specially formulated ceramic and refractory metals. The core assembly 44 is placed within a mold and then surrounded by molten material that will comprise the turbine blade assembly 10. Upon solidification of the material forming the turbine blade assembly 10, the core assembly 44 is removed. Removal of the core assembly 44 is as known and can comprise various processes including leeching or oxidation process where a chemical is used to destroy and leech out the core assembly 44. As appreciated, a worker versed in the art with the benefit of this disclosure would understand that the use of other molding process and materials as are known are within the contemplation and scope of this invention. The type of removal process that is utilized to remove the core 44 from the turbine blade assembly 10 will depend on various factors. These factors include the type of turbine blade material, the type of core material used and the specific configuration of the cooling air passage.

The core assembly 44 utilized to form intricate cooling air passages required to provide the desired cooling properties within the turbine blade assembly 10. The core assembly 44 includes impingement structures 46 that extend and provide formation of the impingement openings 32 within a completed turbine assembly 10. Core assembly 44 also includes separation structures 48 that form the channels and walls that are required for isolating each of the impingement openings 32 from at least another of the impingement openings 32.

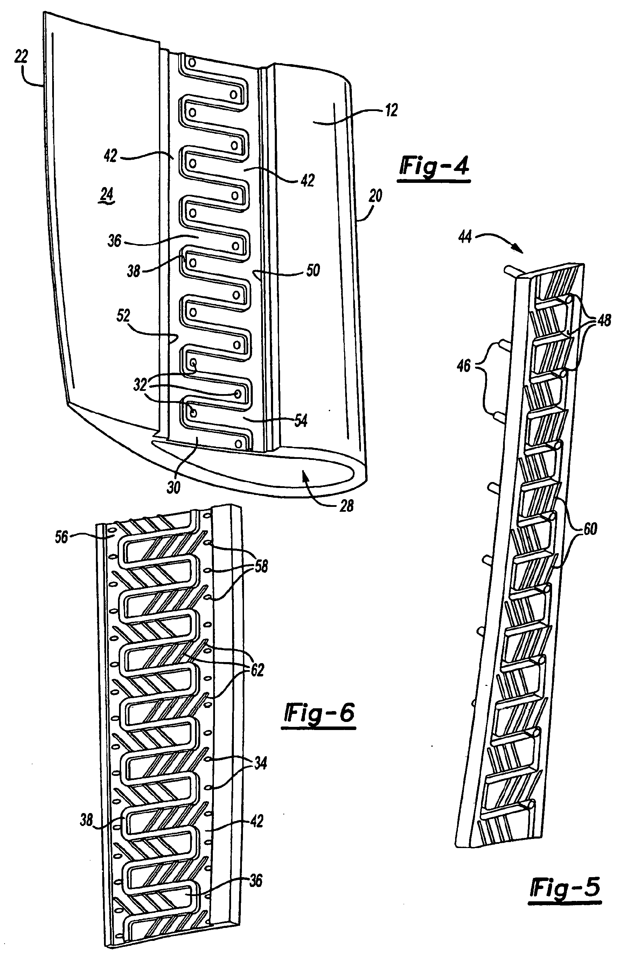

Referring to Figure 4, an airfoil 12 is shown with a portion of the surface removed to illustrate the specific features of the cooling air passage formed therein. The cooling air passage 30 includes the expanded chambers 42 on each side of the cooling air passage 30. The cooling air passage 30 includes a lead edge side 50 and a trailing edge side 52. Each side of the cooling air passage 30 includes an expansion chamber 42. Adjacent impingement openings 32 communicate with an expansion chamber 42 disposed on an opposite side of the cooling air passage 30. No two adjacent impingement openings communicate cooling air to a common expansion chamber 42. In this way the specific cooling flow can be controlled and tailored to provide cooling to specific areas and features of the airfoil 12.

Referring to Figure 5, an example core assembly 44 is shown and includes the impingement structures 46 utilized to form the impingement openings 32 within the airfoil 12. The impingement openings 32 communicate cooling air from the main cavity 28 into the cooling passage 30. The core assembly 44 also includes the separation structures 48 that utilize and provide for the separation of cooling air through each adjacent impingement opening 32. The core assembly 44 includes a reverse structure from that which will be formed within the completed turbine blade airfoil 12. The impingement structures 46 therefore are extensions that will extend through and provide the openings through the airfoil 12 to the main cavity 28. The structure and space of the core assembly 44 provides for the open spaces within the completed airfoil 12.

The core assembly 44 also includes a plurality of heat transfer enhancement features 60. These heat transfer enhancement features 60 are formed in the core assembly 44 as openings such that within the completed cooling air passage 30 the heat transfer enhancement features 60 will form a plurality of ridges that extend upward within the various of the cooling air passage 30. A worker with the benefit of this disclosure would understand that different shapes of the heat transfer enhancement features 60 other than the examples illustrated that disrupt or direct airflow are within the contemplation of this invention.

Referring to Figure 6, an outer side 56 is illustrated. The outer side 56 is cut away from the airfoil 12 illustrated in Figure 4. The outer side 56 is not typically sectioned as is shown in Figure 6 but is an integral portion of the airfoil 12. The outer side 56 is adjacent the exterior surface of the airfoil 12. Figure 4 illustrates an inner side 54 of the cooling passage 30. The inner side is adjacent the main cavity 28. It is for this reason that the ridges 62 are provided on the outer side 56 illustrated in Figure 6. As appreciated, thermal energy radiates along the exterior surface 24.

The outer side 56 that is adjacent the exterior portion of the airfoil 12 is provided on which cooling air flow can most affect desired heat absorption and transfer. Airflow through the impingement openings 32 strikes the outer sides 56 immediately across from the impingement openings 32. Airflow will then proceed as directed by the channels 36 towards the trailing edge or leading edge side towards the expansion chamber 42. Through the channels 36 air will be controlled and tailored to create turbulent effects that increase heat transfer and absorption properties. Once air has reached the expansion chambers 42 it is accumulated and exhausted out the film holes 34. Through the film holes 34 the air will then be exhausted into the main combustion gas stream. The example core assembly 44 is substantially straight. However, the core assembly 44 may include a curved shape to conform to an application specific airfoil shape.

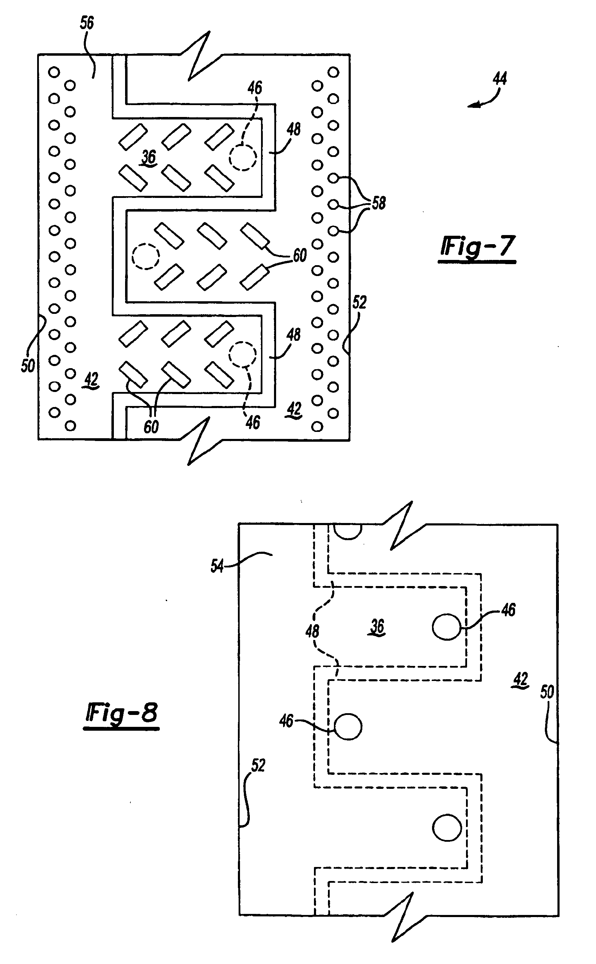

Referring to Figure 7, a portion of the core assembly 44 is shown that provides for the formation of the outer side 56 of the cooling air passage 30. The core assembly 44 includes the structures that form the channels 36, film holes 34, and separating structures 38. The impingement structures 46 are illustrated in dashed lines to indicate that they do not extend outwardly from this side of the core 44. Instead the impingement openings are formed from extensions or structures 46 that extend from an opposite side of the core. This side of the core assembly 44 produces these features within the outer side 56 of the cooling air passage 30 of the completed airfoil 12. In this example core assembly 44, each impingement structure 46 opens into a separate channel 36. Therefore each of the impingement openings 32 is isolated from any of the adjacent the impingement openings 32. Within each of the channels are a plurality of the heat transfer enhancement structures 60 that will form the desired ridges and heat transfer ridges 62 within the completed channels 36. The heat transfer structures 60 illustrated in Figure 7 are cavities that receive material during the molding process to form the outwardly extended ridges.

Referring to Figure 8, an inner side of the core assembly 44 is shown and includes the impingement structures 46. The separation structures 48 are shown in dashed lines to indicate that they would not extend from this side but would extend from the opposite side. Further, the other structures that would be formed on the outer side 56 from the inner side 54 are not shown for clarity purposes. However, as appreciated those features would extend outwardly from the opposite side and may also be represented by dashed lines in this view.

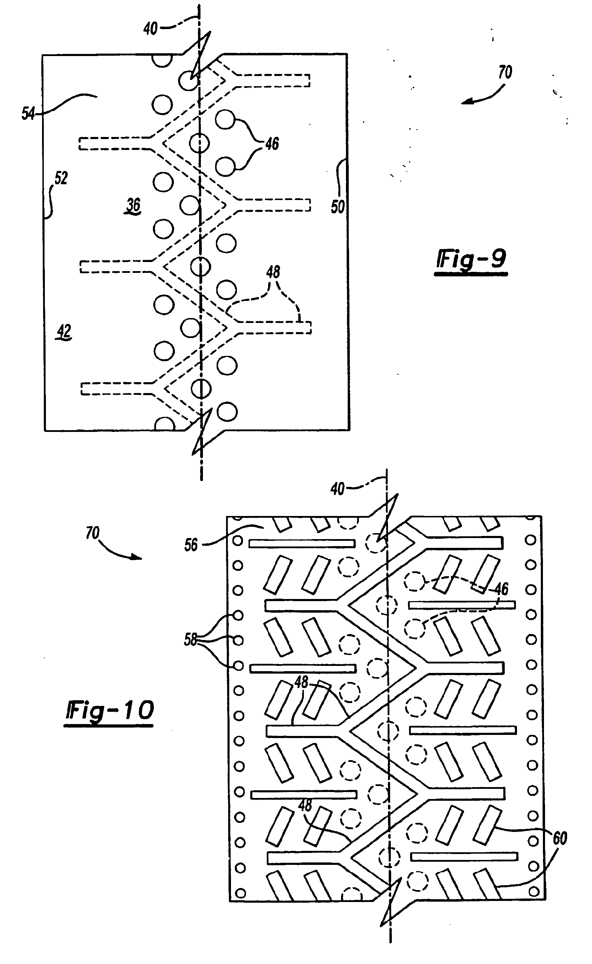

Referring to Figures 9 and 10, another example core assembly 70 according to this invention, includes a plurality of impingement structures 46 disposed within separate channels 36. In this core assembly 70, three impingement structures 46 are disposed within each of the separation channel 36. By providing several impingement openings within each chamber the specific air flow requirements and cooling airflow impingement on a specific area can be tailored to accommodate area specific heat transfer and absorption requirements. Although there are several impingement openings 46 disposed within each channel 36, these are still isolated from at least another impingement opening. Further, the impingement openings are all disposed about a centerline 40.

Although each of the impingement openings 32 is disposed about a common centerline 40 they are still isolated from at least one other impingement opening. Although it is shown in the example core assembly 70 that the impingement openings and impingement structures 46 are disposed about a centerline 40, other configurations and locations of impingement openings are within the contemplation of this invention. A worker versed in the art will understand that isolation of at least one impingement opening relative to another impingement opening provides the desired benefits of tailoring cooling in a cooling passage.

Referring to Figure 10, the core assembly 70 is shown on the side opposite that shown in Figure 9 and illustrates the side of the core assembly 70 that would form the outer side 56 of the cooling air passage 30. This side of the core assembly 70 illustrates the film structures 58 that would form the film holes 34 in the completed airfoil 12. Further heat transfer structures 60 are illustrated that would form the heat transfer ridges 64 in the completed cooling passage 30. Further, as is shown, the impingement structures 46 are shown in dashed lines indicate their location relative to the features formed on the outer side 56. As can be seen by Figure 10 the separation structures 48 and the heat transfer structures 60 provide for the creation of a tailored cooling airflow from the impingement openings to the film openings.

Accordingly, the core assembly 44 and airfoil 12 of this invention provides for the tailoring and improvement of cooling air properties within a turbine blade assembly 10. Further, the core assembly 44 includes a single core that can provide a plurality of individual channels desirable for separating airflow through each of the impingement hole openings. The isolation of the impingement openings provides improved airflow and tailoring capabilities for implementing and optimizing local cooling and flow characteristics within an airfoil.

## Claims

1. An airfoil assembly comprising:
a main cavity (28) for receiving cooling air;
a cooling passage (30) including a plurality of impingement openings (32) in communication with said main cavity (28); **characterised in that** said cooling passage includes a separating structure (38) dividing the cooling passage (30) into separate channels (36) for isolating airflow entering the cooling passage (30) through at least one of said plurality of impingement openings (32) from adjacent airflow entering the cooling passage (30) from an adjacent one of said plurality of impingement openings (32), wherein said each of said channels (36) on one side of said separating structure (38) communicates with a first expanded chamber (42), and each of said channels (36) on the opposite side of said separating structure (38) communicates with a second expanded chamber (42), and further including a plurality of film cooling holes (34) communicating cooling air firom said first and second expanded chambers (42) to an external surface (24) of said airfoil assembly.

2. The assembly as recited in claim 1, wherein each of said channels (36) includes turbulation features (62) for modifying airflow through said channels (36).

3. The assembly as recited in claim 2, wherein said cooling passage (30) includes an inner side (54) adjacent said main cavity (28) and an outer side (56) adjacent an exterior surface (24) of said airfoil assembly, wherein said turbulation features (62) are disposed on said outer side (56).

4. The assembly as recited in claim 3, wherein said separating structure is a wall (38) extending between said inner side (54) and said outer side (56).

5. The assembly as recited in claim 4, wherein air flows from said main cavity (28) through said impingement openings (32) and against said outer side (56).

6. The assembly as recited in any preceding claim, wherein each of said plurality of impingement openings (32) is disposed adjacent a central plane (40) and said channels (36) interfit with each other such that each of said channels (36) includes a portion intersecting said central plane (40).

7. The assembly as recited in claim 6, wherein there are at least two impingement openings (32) disposed within each of said channels (36).

8. The assembly as recited in any preceding claim, wherein said cooling passage (30) includes a leading edge side (50) and a trailing edge side (52) and said channels (36) extend transverse to said leading edge side (50) and said trailing edge side (52).

9. The assembly as recited in claim 8, wherein said first expanded chamber (42) is a leading edge expanded chamber (42) adjacent said leading edge side (50) and said second expanded chamber (42) is a trailing edge expanded chamber (42) adjacent said trailing edge side (52) and wherein adjacent ones of said channels (36) communicate with different ones of said trailing edge side and said leading edge side expanded chambers (42).

10. A core assembly (44;70) for forming a cooling passage (30) within an airfoil (12), said core assembly comprising:
a first side including a plurality of impingement structures (46) for forming a corresponding plurality of impingement openings (32) for introducing air into said cooling passage (30);
a second side including a plurality of film cooling structures (58) for forming a corresponding plurality of film cooling holes (34) out of said cooling passage (30); and
a plurality of separation structures (48) for forming walls for separating the airflow within the cooling passage (30) from at least one of said corresponding plurality of impingement openings (32) from airflow within the cooling passage (30) from another of said corresponding plurality of impingement openings (32) by forming separate channels (36), wherein said each of said channels (36) on one side of said separating structure (38) communicates with a first expanded chamber (42), and each of said channels (36) on the opposite side of said separating structure (38) communicates with a second expanded chamber (42), said film cooling holes (34) communicating with said respective expanded chambers (42).

11. The assembly as recited in claim 10, wherein said second side includes a plurality of turbulation structures (60) for forming turbulation features for modifying cooling air flow.

12. The assembly as recited in claim 10 or 11, wherein each of said plurality of impingement structures (46) forms an impingement opening (32) within the airfoil that is isolated from any other of said corresponding impingement openings (32).

13. The assembly as recited in claim 10, 11 or 12, wherein said core assembly comprises a ceramic material.

14. The assembly as recited in any of claims 10 to 13, wherein said plurality of impingement structures (46) form a corresponding plurality of impingement openings (32) for communicating cooling air between a main cavity (28) and the cooling passages (30).

15. A method of forming a cooling passage (30) for an airfoil assembly comprising the steps of:
(a) forming a first core (44;70) including impingement structures (46) for forming impingement openings (32) and separation structures (48) for forming channels (36) within the cooling passage (30) for isolating airflow from each of the impingement openings (32) from airflow from an adjacent impingement openings by forming separate channels (36), wherein said each of said channels (36) on one side of said separating structure (38) communicates with a first expanded chamber (42), and each of said channels (36) on the opposite side of said separating structure (38) communicates with a second expanded chamber (42), and forming a plurality of film hole structures (58) for forming a corresponding plurality of film cooling holes (34) in the airfoil assembly from said first and second expanded chambers (42);
(b) casting the airfoil assembly with the core of step (a) disposed therein; and
(c) removing the core (44;70) from the cast airfoil.

16. The method as recited in claim 15, wherein said step (a) includes forming the separation structures (46) for forming the channels (36) such that a portion of each channel (36) interfits within another of the channels (36).

17. The method as recited in claims 15 or 16, including the step of forming a second core for forming a main cavity (28) within the airfoil (12) for receiving and communicating cooling air to the cooling passages (30) formed by the first core.

18. The method as recited in any of claims 15 to 17, wherein said step (a) includes forming a plurality of turbulation structures (60) for forming a corresponding plurality of turbulation features (62) within the cooling passage (30) of the airfoil.

## Patentansprüche

1. Strömungsprofilanordnung aufweisend:
einen Haupthohlraum (28) um Kühlluft zu erhalten;
einen Kühldurchlass (30) aufweisend eine Mehrzahl von Aufprallöffnungen (32), die in Verbindung mit dem Haupthohlraum (28) stehen; **dadurch gekennzeichnet, dass** der Kühldurchlass eine Trennstruktur (38) aufweist, die den Kühldurchlass (30) in getrennte Kanäle (36) aufteilt, um den Luftstrom, der in den Kühldurchlass (30) durch wenigstens eine von der Mehrzahl von Aufprallöffnungen (32) eintritt, von einem benachbarten Luftstrom, der den Kühldurchlass (30) von einer Benachbarten der Mehrzahl von Aufprallöffnungen (32) eintritt, zu isolieren, wobei jeder dieser Kanäle (36) auf einer Seite der Trennstruktur (38) in Verbindung mit einer ersten ausgedehnten Kammer (42) steht, und jeder der Kanäle (36) auf der gegenüberliegenden Seite der Trennstruktur (38) in Verbindung mit einer zweiten ausgedehnten Kammer (42) steht, und weiterhin aufweisend eine Mehrzahl von Filmkühllöchern (34), die Kühlluft von der ersten und der zweiten ausgedehnten Kammer (42) zu einer äußeren Oberfläche (24) der Strömungsprofilanordnung leiten.

2. Anordnung nach Anspruch 1, wobei jeder der Kanäle (36) Verwirbelungsstrukturen (62) zum Modifizieren des Luftstroms durch die Kanäle (36) aufweist.

3. Anordnung nach Anspruch 2, wobei der Kühldurchlass (30) eine dem Haupthohlraum (28) benachbarten inneren Seite (54) und eine der äußeren Oberfläche (24) der Strömungsprofilanordnung benachbarten äußeren Seite (56) aufweist, wobei die Verwirbelungsstrukturen (62) auf der äußeren Seite (56) angeordnet sind.

4. Anordnung nach Anspruch 3, wobei die Trennstruktur eine Wand (38) ist, die sich zwischen der inneren Seite (54) und der äußeren Seite (56) erstreckt.

5. Anordnung nach Anspruch 4, wobei Luft vom Haupthohlraum (28) durch die Aufprallöffnungen (32) und gegen die äußere Seite (56) strömt.

6. Anordnung nach einem der vorherigen Ansprüche, wobei jede der Mehrzahl von Aufprallöffnungen (32) einer zentralen Ebene (40) benachbart angeordnet ist und die Kanäle (36) sich so ineinander fügen, dass jeder der Kanäle (36) einen Bereich aufweist, der die zentrale Ebene (40) kreuzt.

7. Anordnung nach Anspruch 6, wobei wenigstens zwei Aufprallöffnungen (32) innerhalb eines jeden Kanals (36) angeordnet sind.

8. Anordnung nach einem der vorherigen Ansprüche, wobei der Kühldurchlass (30) eine Vorderkantenseite (50) und eine Hinterkantenseite (52) aufweist und die Kanäle (36) sich quer zur Vorderkantenseite (50) und zur Hinterkantenseite (52) erstrecken.

9. Anordnung nach Anspruch 8, wobei die erste ausgedehnte Kammer (52) eine der Vorderkantenseite (50) benachbarte Vorderkantenausgedehnte Kammer (42) ist und die zweite ausgedehnte Kammer (42) eine die Hinterkantenseite (52) benachbarte Hinterkantenausgedehnte Kammer (42) ist und wobei die Benachbarten der Kanäle (36) mit Verschiedenen aus hinterkantenseitig und der vorderkantenseitig ausgedehnter Kammern (42) in Verbindung stehen.

10. Kernanordnung (44; 70) zum Ausbilden eines Kühldurchlasses (30) innerhalb eines Strömungsprofils (12), wobei die Kernanordnung aufweist:
eine erste Seite, die eine Mehrzahl von Aufprallstrukturen (46) aufweist, um eine korrespondierende Mehrzahl von Aufprallöffnungen (32) zu bilden und Luft in den Kühldurchlass (30) zu leiten;
eine zweite Seite, die eine Mehrzahl von Filmkühlstrukturen (58) aufweist, um eine korrespondierende Mehrzahl von Filmkühllöchern (34) aus dem Kühldurchlass (30) heraus zu bilden; und
eine Mehrzahl von Trennstrukturen (48) zum Ausbilden von Wänden zum Trennen des Luftstroms innerhalb des Kühldurchlasses (30) von wenigstens einer der korrespondierenden Mehrzahl von Aufprallöffnungen (32) von einem Luftstrom innerhalb des Kühldurchlasses (30) von wenigstens einer anderen korrespondierenden Mehrzahl von Aufprallöffnungen (32), durch Bilden von separaten Kanälen (36), wobei jeder dieser Kanäle (36) auf einer Seite der Trennstruktur (38) mit einer ersten ausgedehnten Kammer (42) in Verbindung steht und jeder dieser Kanäle (36) auf der entgegengesetzten Seite der Trennstruktur (38) mit einer zweiten ausgedehnten Kammer (42) in Verbindung steht, wobei die Filmkühllöcher (34) mit den entsprechenden ausgedehnten Kammern (42) in Verbindung stehen.

11. Anordnung nach Anspruch 10, wobei die zweite Seite eine Mehrzahl von Verwirbelungsstrukturen (60) aufweist, die Verwirbelungsmerkmale zum Modifizieren des Kühlluftstroms bilden.

12. Anordnung nach Anspruch 10 oder 11, wobei jede der Mehrzahl von Aufprallstrukturen (46) eine Aufprallöffnung (32) innerhalb des Strömungsprofils bilden, die von jeder anderen korrespondierenden Aufprallöffnung (32) isoliert ist.

13. Anordnung nach Anspruch 10, 11 oder 12, wobei die Kernanordnung aus keramischen Material besteht.

14. Anordnung nach einem der Ansprüche 10 bis 13, wobei die Mehrzahl von Aufprallstrukturen eine Mehrzahl von Aufprallöffnungen (32) bilden, um Kühlluft zwischen dem Haupthohlraum (28) und den Kühlkanälen (30) zu kommunizieren.

15. Verfahren zum Bilden eines Kühldurchlasses (30) für eine Strömungsprofilanordnung, wobei dieses folgende Schritte aufweist:
(a) Bilden eines ersten Kerns (44; 70), der Aufprallstrukturen (46) zum Bilden von Aufprallöffnungen (32) und Trennstrukturen (48) zum Bilden von Kanälen (36) innerhalb des Kühldurchlasses (30) zum Isolieren des Luftstroms von jeder der Aufprallöffnungen (32) von dem Luftstrom von einer benachbarten der Aufprallöffnungen durch Ausbilden getrennter Kanäle (36) aufweist, wobei jeder der Kanäle (36) auf einer Seite der Trennstruktur (38) mit der ersten ausgedehnten Kammer (42) in Verbindung steht und jeder der Kanäle auf der gegenüberliegenden Seite der Trennstruktur (38) mit einer zweiten ausgedehnten Kammer (42) in Verbindung steht und eine Mehrzahl von Filmlochstrukturen (58) bildet, um eine korrespondierende Mehrzahl von Filmkühllöchern (34) in der Strömungsprofilanordnung von der ersten und der zweiten ausgedehnten Kammer (42) zu bilden;
(b) Formen der Strömungsprofilanordnung, wobei der Kern aus Schritt (a) darin eingearbeitet ist; und
(c) Entfernen des Kerns (44; 70) von dem geformten Strömungsprofil.

16. Verfahren nach Anspruch 15, wobei Schritt (a) das Bilden der Trennstruktur (46) zum Bilden von Kanälen (36) aufweist, derart dass ein Bereich eines jeweiligen Kanals (36) mit einem anderen der Kanäle (36) zusammenpasst.

17. Verfahren nach Anspruch 15 oder 16, das den Schritt umfasst, einen zweiten Kern zu formen, um einen Haupthohlraum (28) innerhalb des Strömungsprofils (12) zu bilden, um Kühlluft aufzunehmen und zu den Kühlkanälen (30) zu leiten, welche von dem ersten Kern gebildet sind.

18. Verfahren nach einem der Ansprüche 15 bis 17, wobei Schritt (a) das Formen einer Mehrzahl von Verwirbelungsstrukturen (60) aufweist, um eine korrespondierende Mehrzahl von Verwirbelungsmerkmalen (62) innerhalb des Kühldurchlasses (30) des Strömungsprofils zu bilden.

## Revendications

1. Ensemble formant profil aérodynamique comprenant :
une cavité principale (28) pour recevoir de l'air de refroidissement ;
un passage de refroidissement (30) incluant une pluralité d'ouvertures de refroidissement par contact (32) en communication avec ladite cavité principale (28) ; **caractérisé en ce que** ledit passage de refroidissement inclut une structure de séparation (38) divisant le passage de refroidissement (30) en canaux distincts (36) pour isoler un flux d'air entrant dans le passage de refroidissement (30) à travers au moins une ouverture de ladite pluralité d'ouvertures de refroidissement par contact (32) d'un flux d'air adjacent entrant dans le passage de refroidissement (30) à partir d'une ouverture adjacente de ladite pluralité d'ouvertures de refroidissement par contact (32), dans lequel chaque dit canal desdits canaux (36) sur un côté de ladite structure de séparation (38) communique avec une première chambre élargie (42), et chacun desdits canaux (36) sur le côté opposé de ladite structure de séparation (38) communique avec une seconde chambre élargie (42), et incluant en outre une pluralité de trous de refroidissement par convection (34) communiquant l'air de refroidissement provenant desdites première et seconde chambres élargies (42) à une surface externe (24) dudit ensemble formant profil aérodynamique.

2. Ensemble selon la revendication 1, dans lequel chacun desdits canaux (36) inclut des particularités de turbulence (62) pour modifier le flux d'air à travers lesdits canaux (36).

3. Ensemble selon la revendication 2, dans lequel ledit passage de refroidissement (30) inclut un côté intérieur (54) adjacent à ladite cavité principale (28) et un côté extérieur (56) adjacent à une surface extérieure (24) dudit ensemble formant profil aérodynamique, dans lequel lesdites particularités de turbulence (62) sont disposées sur ledit côté extérieur (56).

4. Ensemble selon la revendication 3, dans lequel ladite structure de séparation est une paroi (38) s'étendant entre ledit côté intérieur (54) et ledit côté extérieur (56).

5. Ensemble selon la revendication 4, dans lequel l'air s'écoule à partir de ladite cavité principale (28) à travers lesdites ouvertures de refroidissement par contact (32) et contre ledit côté extérieur (56).

6. Ensemble selon l'une quelconque des revendications précédentes, dans lequel chaque ouverture de ladite pluralité d'ouvertures de refroidissement par contact (32) est disposée adjacente à un plan central (40) et lesdits canaux (36) s'ajustent mutuellement de sorte que chacun desdits canaux (36) inclut une partie coupant ledit plan central (40).

7. Ensemble selon la revendication 6, dans lequel il y a au moins deux ouvertures de refroidissement par contact (32) disposées dans chacun desdits canaux (36).

8. Ensemble selon l'une quelconque des revendications précédentes, dans lequel ledit passage de refroidissement (30) inclut un côté bord d'attaque (50) et un côté bord de fuite (52) et lesdits canaux (36) s'étendent de façon transversale audit côté bord d'attaque (50) et audit côté bord de fuite (52).

9. Ensemble selon la revendication 8, dans lequel ladite première chambre élargie (42) est une chambre élargie de bord d'attaque (42) adjacente audit côté bord d'attaque (50) et ladite seconde chambre élargie (42) est une chambre élargie de bord de fuite (42) adjacente audit côté bord de fuite (52) et dans lequel des canaux adjacents desdits canaux (36) communiquent avec des chambres différentes des chambres élargies (42) dudit côté bord de fuite et dudit côté bord d'attaque.

10. Ensemble formant âme (44 ; 70) pour former un passage de refroidissement (30) à l'intérieur d'un profil aérodynamique (12), ledit ensemble formant âme comprenant :
un premier côté incluant une pluralité de structures de refroidissement par contact (46) pour former une pluralité correspondante d'ouvertures de refroidissement par contact (32) pour introduire de l'air dans ledit passage de refroidissement (30) ;
un second côté incluant une pluralité de structures de refroidissement par convection (58) pour former une pluralité correspondante de trous de refroidissement par convection (34) hors dudit passage de refroidissement (30) ; et
une pluralité de structures de séparation (48) pour former des parois pour séparer le flux d'air à l'intérieur du passage de refroidissement (30) provenant d'au moins une ouverture de ladite pluralité correspondante d'ouvertures de refroidissement par contact (32) du flux d'air à l'intérieur du passage de refroidissement (30) provenant d'une autre ouverture de ladite pluralité correspondante d'ouvertures de refroidissement par contact (32) en formant des canaux distincts (36), dans lesquels chaque dit canal desdits canaux (36) sur un côté de ladite structure de séparation (38) communique avec une première chambre élargie (42) et chacun desdits canaux (36) sur le côté opposé de ladite structure de séparation (38) communique avec une seconde chambre élargie (42), lesdits trous de refroidissement par convection (34) communiquant avec lesdites chambres élargies respectives (42).

11. Ensemble selon la revendication 10, dans lequel ledit second côté inclut une pluralité de structures de turbulence (60) pour former des particularités de turbulence pour modifier le flux d'air de refroidissement.

12. Ensemble selon la revendication 10 ou 11, dans lequel chaque structure de ladite pluralité de structures de refroidissement par contact (46) forme une ouverture de refroidissement par contact (32) à l'intérieur du profil aérodynamique qui est isolée de toute autre desdites ouvertures de refroidissement par contact correspondantes (32).

13. Ensemble selon la revendication 10, 11 ou 12, dans lequel ledit ensemble formant âme comprend une matière céramique.

14. Ensemble selon l'une quelconque des revendications 10 à 13, dans lequel ladite pluralité de structures de refroidissement par contact (46) forme une pluralité correspondante d'ouvertures de refroidissement par contact (32) pour communiquer l'air de refroidissement entre une cavité principale (28) et les passages de refroidissement (30).

15. Procédé de formation d'un passage de refroidissement (30) pour un ensemble formant profil aérodynamique comprenant les étapes suivantes :
(a) formation d'une première âme (44 ; 70) incluant des structures de refroidissement par contact (46) pour former des ouvertures de refroidissement par contact (32) et des structures de séparation (48) pour former des canaux (36) à l'intérieur du passage de refroidissement (30) pour isoler le flux d'air provenant de chacune des ouvertures de refroidissement par contact (32) du flux d'air provenant d'ouvertures de refroidissement par contact adjacentes en formant des canaux distincts (36), dans lequel chaque dit canal desdits canaux (36) sur un côté de ladite structure de séparation (38) communique avec une première chambre élargie (42), et chacun desdits canaux (36) sur le côté opposé de ladite structure de séparation (38) communique avec une seconde chambre élargie (42), et formation d'une pluralité de structures de trou de refroidissement par convection (58) pour former une pluralité correspondante de trous de refroidissement par convection (34) dans l'ensemble formant profil aérodynamique à partir desdites première et seconde chambres élargies (42) ;
(b) coulée de l'ensemble formant profil aérodynamique avec l'âme de l'étape (a) disposée en son sein ; et
(c) enlèvement de l'âme (44 ; 70) depuis le profil aérodynamique coulé.

16. Procédé selon la revendication 15, dans lequel ladite étape (a) inclut la formation des structures de séparation (46) pour former les canaux (36) de sorte qu'une partie de chaque canal (36) s'ajuste mutuellement à l'intérieur d'un autre des canaux (36).

17. Procédé selon les revendications 15 ou 16, incluant l'étape de formation d'une seconde âme pour former une cavité principale (28) à l'intérieur du profil aérodynamique (12) pour recevoir et communiquer de l'air de refroidissement aux passages de refroidissement (30) formés par la première âme.

18. Procédé selon l'une quelconque des revendications 15 à 17, dans lequel ladite étape (a) inclut la formation d'une pluralité de structures de turbulence (60) pour former une pluralité correspondante de particularités de turbulence (62) à l'intérieur du passage de refroidissement (30) du profil aérodynamique.
